# EUROPÄISCHE PATENTANMELDUNG

(11) **EP 0 933 539 A1**
(43) Veröffentlichungstag der Anmeldung: **04.08.1999**
(21) Anmeldenummer: 99100520.8
(22) Anmeldetag: 13.01.1999
(51) Int. Cl.: F16B 25/00

(54) **Gewindeschneidende Schraube**

(30) Priorität: 15.01.1998 DE 19801102
(71) Anmelder: TOGE-Dübel A. Gerhard KG, 90431 Nürnberg (DE)
(72) Erfinder: Gerhard, Anton, 90427 Nürnberg (DE)
(74) Vertreter: Rau, Manfred, Dr. Dipl.-Ing.

(57) **Zusammenfassung**

Eine gewindeschneidende Schraube, insbesondere Betonschraube, weist einen Kern mit einem Gewinde (6) auf. Der Kern ist an seinem Einführende (2) mit einem kegelstumpfförmig verjüngten Abschnitt (3) versehen, auf dem das Gewinde (6) als im Durchmesser ansteigender Gewinde-Abschnitt (7) ausgebildet ist. Das Gewinde (6) einschließlich des verjüngten Abschnitts (3) ist mit Schneidkerben (17) versehen.

## Beschreibung

Die Erfindung betrifft eine gewindeschneidende Schraube, insbesondere Betonschraube, nach dem Oberbegriff des Anspruches 1.

Aus DE 297 04 226.2 U1 (entsprechend PCT/EP97/03867) ist eine derartige Schraube bekannt, deren Gewinde im Bereich des Einführendes mit Schneidkerben versehen ist. Das Gewinde weist gegenüber dem Kern zumindest im Bereich des Schneiden-Abschnitts eine gleichbleibende Höhe auf. Es hat sich gezeigt, daß insbesondere zu Beginn des Einschraubens in ein Bohrloch in Beton erhebliche Einschraub-Drehmomente auftreten können.

Der Erfindung liegt daher die Aufgabe zugrunde, die Schraube der gattungsgemäßen Art so weiterzubilden, daß das Einschrauben insbesondere beim Beginn des Einschraubvorganges erleichtert wird.

Diese Aufgabe wird erfindungsgemäß durch die Merkmale im Kennzeichnungsteil des Anspruches 1 gelöst. Durch die Ausgestaltung des ansteigenden Gewinde-Abschnitts auf dem verjüngten Abschnitt wird erreicht, daß die Schneidleistung über einen größeren Teil des Gewindes verteilt wird.

Vorteilhafte Ausgestaltungen ergeben sich aus den Unteransprüchen.

Weitere Merkmale, Vorteile und Einzelheiten der Erfindung ergeben sich aus der nachfolgenden Beschreibung eines Ausführungsbeispieles anhand der Zeichnung. Es zeigt:
- Fig. 1: eine Draufsicht auf eine Betonschraube,
- Fig. 2: eine Draufsicht auf eine vergrößerte Teildarstellung des Einführendes der Betonschraube,
- Fig. 3: eine Stirnansicht des Einführendes der Betonschraube in vergrößerter Darstellung,
- Fig. 4: einen Querschnitt durch die Betonschraube gemäß der Schnittlinie IV-IV in Fig. 1 in vergrößerter Darstellung,
- Fig. 5: einen Teil-Längsschnitt durch die Betonschraube gemäß der Schnittlinie V-V in Fig. 1 in stark vergrößerter Darstellung,
- Fig. 6: einen weiteren Teil-Längsschnitt durch die Betonschraube gemäß der Schnittlinie VI-VI in Fig. 1 in stark vergrößerter Darstellung und
- Fig. 7: eine Teildraufsicht auf eine abgewandelte Ausführungsform einer Schneidkerbe.

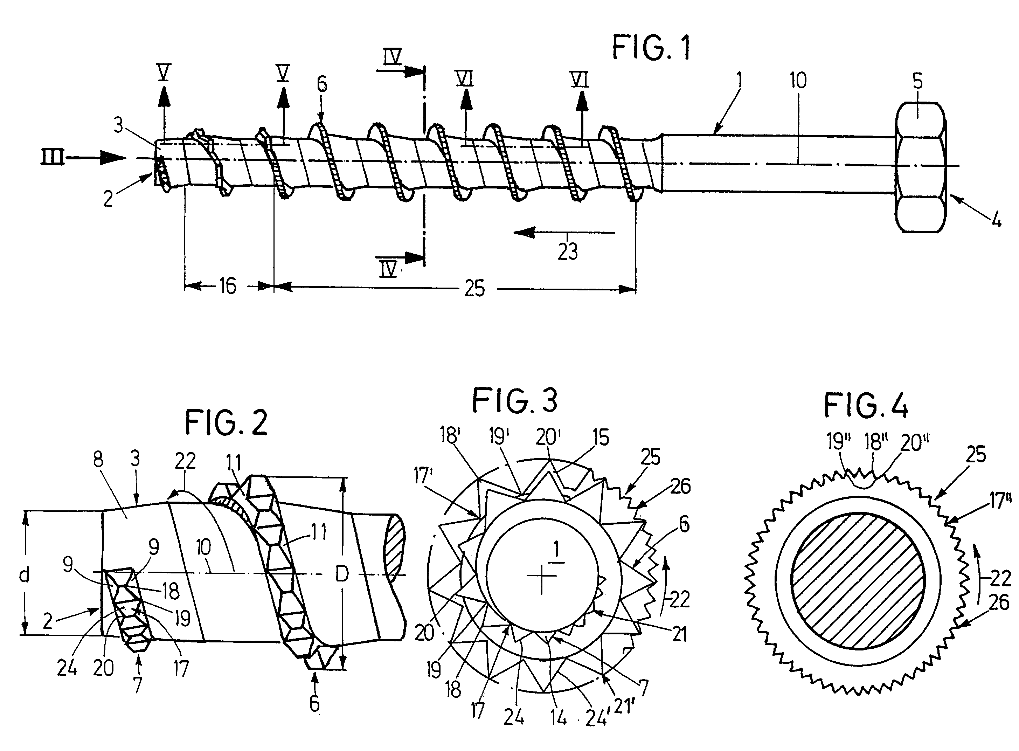

Die in Fig. 1 dargestellte Schraube weist einen Kern 1 auf, der an einem ersten Ende, dem Einführende 2, einen leicht verjüngten, kegelstumpfförmigen Abschnitt 3 aufweist. An einem zweiten Ende 4 des Kerns 1 ist ein beliebig gestalteter Schraubenkopf 5 ausgebildet. Auf einem Teil des Kerns 1 einschließlich des verjüngten Abschnitts 3 ist ein stegartig ausgebildetes eingängiges Gewinde 6 ausgeformt.

Wie den Figuren 2 bis 4 zu entnehmen ist, ist auf dem verjüngten Abschnitt 3 des Kerns 1 ein ansteigender Gewindeabschnitt 7 des Gewindes 6 ausgeformt, der am Einführende 2 des Kerns 1 aus der Oberfläche 8 des verjüngten Abschnitts 3 heraus beginnt und über eine halbe bis eine ganze Windung, d. h. eine Teilung t, des Gewindes 6 heraus auf die volle Gewindehöhe, d. h. den Außendurchmesser D des Gewindes 6 ansteigt. Die Flanken 9 des Gewindeabschnitts 7 steigen direkt aus der Oberfläche 8 des verjüngten Abschnitts 3 des Kerns 1 an und zwar unter einem Öffnungswinkel von etwa 60 °, d. h. die beiden Flanken 9 des Gewindeabschnitts 7 sind jeweils um etwa 30 ° gegenüber einem Radius auf die Mittel-Längs-Achse 10 des Kerns 1 geneigt. Der Öffnungswinkel sollte im Bereich von 50 ° bis 70 ° betragen. Der Durchmesser d des Kerns 1 an seinem Einführende 2 ist etwas kleiner als der Nenndurchmesser einer Bohrung, in die die Schraube eingesetzt werden soll. Der Nenndurchmesser einer Bohrung ist international genormt, beträgt also 4, 5, 6, 8, 10, 12, 14, 16, ... mm.

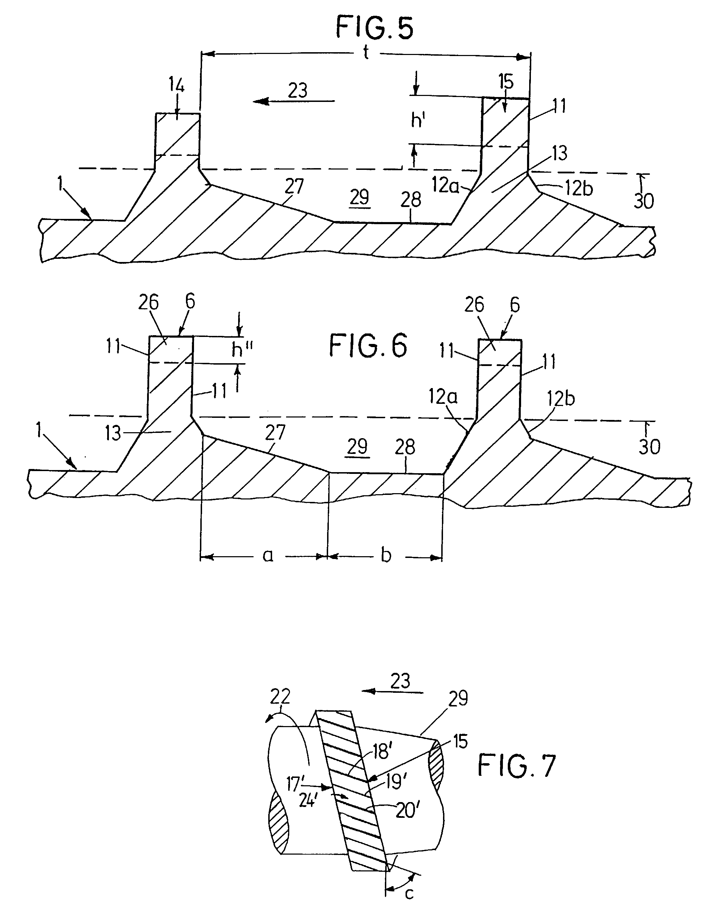

Hinter dem verjüngten Abschnitt 3 mit dem ansteigenden Gewindeabschnitt 7 ist das Gewinde 6 so ausgestaltet, wie es aus DE 297 04 226.2 U1 (entsprechend PCT/EP97/03867) bekannt ist. Es weist entsprechend Fig. 5 und 6 zueinander parallele Flanken 11 auf, die parallel zu einem Radius auf die Mittel-Längs-Achse 10 verlaufen. Die Flanken 11 gehen jeweils mittels eines geneigten Fußabschnitts 12a bzw. 12b in den Kern 1 über, wobei der jeweilige Fußabschnitt 12a bzw. 12b gegenüber dem erwähnten Radius geneigt ist, so daß der durch die Fußabschnitte 12a, 12b begrenzte Fuß 13 des Gewindes 6 sich zum Kern 1 hin verbreitert. Der ansteigende Gewinde-Abschnitt 7 geht stetig in das sich anschließende Gewinde 6 über.

Der ansteigende Gewinde-Abschnitt 7 und höchstens die beiden sich anschließenden Windungen des Gewindes 6 sind mit Schneidzähnen 14 bzw. 15 versehen. Dort wo das Gewinde 6 mit Schneidzähnen 15 versehen ist, bildet es einen Schneiden-Abschnitt 16. Die Schneidzähne 14 im ansteigenden Gewindeabschnitt 7 werden im wesentlichen durch Schneidkerben 17 gebildet, die jeweils - wie Fig. 3 entnehmbar ist - die Form eines gleichschenkligen Dreiecks aufweisen. Die Längskanten 18, 19, 20 der Schneidkerben 17, d. h. die beiden Längskanten 18, 20 am Übergang zur Außenfläche 21 und die Längskante 19 am Grund der Schneidkerbe 17 verlaufen parallel zur Achse 10. Die - bezogen auf die Einschraub-Drehrichtung 22 - jeweils nacheilende Längskante 20 ist eine Schneidkante. Die zwischen dieser Schneidkante 20 und der am Grund der Schneidkerbe 17 verlaufenden Längskante 19 gebildete Fläche ist eine Abtransport-Fläche 24 für Bohrmehl. Wie insbesondere Figur 3 erkennen läßt, können die Schneidzähne 17 so angeordnet sein, daß die nacheilende Schneidkante 20 einer Schneidkerbe 17 die voreilende Längskante 18 der nächstfolgenden Schneidkerbe ist. In diesem Fall schrumpft die Außenfläche 21 auf eine solche Längskante zusammen, die jeweils eine Schneidkante ist. Für die Ausgestaltung der Schneidzähne 15 des Schneiden-Abschnitts 16 gilt die vorstehende Beschreibung, so daß ohne erneute Beschreibung dieselben Bezugsziffern jedoch mit einem hochgesetzten Strich verwendet werden. Die radiale Höhe h' der Schneidkerben 17' beträgt für Bohrungs-Nenndurchmesser von 5 mm 0,2 bis 0,5 mm und beispielsweise für Bohrungs-Nenndurchmesser von 16 mm 0,5 bis 0,8 mm.

Der sich an den Schneiden-Abschnitt 16 anschließende Gewindeabschnitt kann als einfacher Gewindeabschnitt mit der gleichen Grundform wie der Schneiden-Abschnitt 16, jedoch ohne Schneidzähne, und ggf. mit einem geringfügig verringerten Außendurchmesser D ausgebildet seien, wie in DE 297 04 226.2 U1 (entsprechend PCT/EP97/03867) beschrieben. Beim Einschrauben der Schrauben in hochfesten Beton können die im Beton vorhandenen Kieselsteine jedoch ein Einschrauben erschweren. Für solche Fälle ist der sich an den Schneiden-Abschnitt 16 anschließende Abschnitt des Gewindes 6 als Mikroschneiden-Abschnitt 25 ausgestaltet, wie es insbesondere aus Fig. 4 und 6 ersichtlich ist. Hier sind Mikro-Schneidzähne 26 vorgesehen, die grundsätzlich so ausgebildet sind, wie es auch bereits für die Schneidzähne 14, 15 beschrieben wurde; es werden daher dieselben Bezugsziffern wie zuvor verwendet, jedoch mit einem hochgesetzten Doppelstrich. Die Mikro-Schneidzähne 26 weisen im Vergleich zu den Schneid-zähnen 15 eine erheblich geringere radiale Höhe h" von 0,1 bis 0,2 mm auf. Die Mikro-Schneidzähne 26 führen noch eine geringfügige Nach-Schneidarbeit aus. Für die Höhe h' gilt im Verhältnis zur Höhe h": 2h" ≤ h' und bevorzugt 3 h" ≤ h' ≤ 7 h".

Wie insbesondere den Figuren 5 und 6 entnehmbar ist, ist der Kern 1 der Schraube nicht zylindrisch ausgebildet. Er weist vielmehr zwischen zwei benachbarten Windungen zwei Kern-Außenflächen-Abschnitte 27, 28 auf. Der in Einschraub-Längs-Richtung 23 voreilende Kern-Außenflächen-Abschnitt 27 verjüngt sich entgegen der Einschraub-Längs-Richtung 23. Der sich entgegen der Einschraub-Längs-Richtung 23 anschließende Abschnitt 28 ist zylindrisch ausgebildet. Der Abschnitt 27 erstreckt sich in Richtung der Achse 10 über eine Länge a, während der Abschnitt 28 sich über eine Länge b erstreckt. Es gilt a ≥ b. Durch diese Ausgestaltung wird zwischen den benachbarten Gewindegängen eine Kammer 29 gebildet, die - bezogen auf die in den Figuren 5 und 6 angedeutete Bohrlochwand 30 - sich erweitert. Der Kern-Außenflächen-Abschnitt 27 dient als Ablauffläche für das Bohrmehl, das überwiegend im Bereich des Kern-Außenflächen-Abschnitts 28 in der Kammer 29 gespeichert wird. Da das Volumen der Kammer 29 im Bereich des Abschnitts 28 größer als das Volumen des in die Bohrlochwand 30 geschnittenen Ganges ist, behindert das Bohrmehl den Einschraubvorgang nicht, d. h. es tritt keine Erhöhung des Drehmomentes beim Einschrauben der Schraube auf, das durch Reibung zwischen dem in der Kammer 29 gespeicherten Bohrmehl und der Bohrlochwand 30 gebildet werden könnte. Wie den Figuren 5 und 6 weiterhin entnehmbar ist, tragen die Windungen des Gewindes 6 über ihre volle Höhe in dem durch die Bohrlochwand 30 begrenzten Beton.

Wie in Fig. 7 angedeutet ist, können insbesondere die Schneidzähne 15 im Schneiden-Abschnitt 16 einen Verlauf aufweisen, durch den sie eine Gewindefunktion bekommen. Die Schneidkerben 17' sind in diesem Fall so ausgebildet, daß die jeweils in Einschraub-Drehrichtung 22 nacheilenden Längskanten 20 und damit die Abtransport-Flächen 24' der Schneidkerben 17' bezogen auf die Einschraub-Drehrichtung 22 und die Einschraub-Längsrichtung 23 nacheilen, so daß ein weitgehend reibungsfreier Transport des Bohrmehls durch die Schneidkerben 17' in die nachfolgenden Kammern 29 erfolgt. Die Schneidkerben 17' bilden also einen gewindeartigen Kanal mit großer Steigung c von 60 ° bis 80 ° bezogen auf die Einschub-Längs-Richtung 23. Diese Ausgestaltung kann selbstverständlich auch bei den Schneidzähnen 14 und den Mikro-Schneidzähnen 26 vorgesehen werden, obwohl dies dort wegen des relativ geringen Anfalls von Bohrmehl nicht so bedeutsam ist.

## Patentansprüche

1. Gewindeschneidende Schraube, insbesondere Betonschraube,
mit einem Kern (1),
mit einem einstückig mit dem Kern (1) ausgebildeten Gewinde (6) mit Flanken (11),
mit einem Einführende (2),
mit einem am Einführende (2) des Kerns (1) ausgebildeten kegelstumpfförmig verjüngten Abschnitt (3) und
mit einem im Bereich des Einführendes (2) ausgebildeten Schneiden-Abschnitt (16), in dem zum Außenumfang des Gewindes (6) hin offen ausgebildete Schneidkerben (17') ausgebildet sind,
**dadurch gekennzeichnet,**
**daß** das Gewinde (6) auf dem verjüngten Abschnitt (3) als im Durchmesser ansteigender Gewinde-Abschnitt (7) ausgebildet ist, der stetig in das Gewinde (6) des Schneiden-Abschnitts (16) übergeht.

2. Schraube nach Anspruch 1, **dadurch gekennzeichnet,**
**daß** der verjüngte Gewinde-Abschnitt (7) sich über eine halbe bis eine ganze Windung des Gewindes (6) erstreckt.

3. Schraube nach Anspruch 1 oder 2, **dadurch gekennzeichnet,**
**daß** das Gewinde (6) des ansteigenden Gewinde-Abschnitts (7) aus der Oberfläche (8) des Ringabschnitts (3) des Kerns (1) ansteigt.

4. Schraube nach einem der Ansprüche 1 bis 3, **dadurch gekennzeichnet,**
**daß** die Flanke (9) des Gewindes (6) im ansteigenden Gewinde-Abschnitt (7) einen Flankenwinkel von 50 bis 70 ° und vorzugsweise von etwa 60 ° einschließt.
